(19) Europäisches Patentamt
European Patent Office
Office européen des brevets

(11) Veröffentlichungsnummer: **0 387 824 A2**

(12) **EUROPÄISCHE PATENTANMELDUNG**

(21) Anmeldenummer: **90104782.9**

(22) Anmeldetag: **14.03.90**

(51) Int. Cl.5: **C08L 77/00, C08L 71/12, C08G 65/48**

(30) Priorität: **15.03.89 DE 3908408**

(43) Veröffentlichungstag der Anmeldung: **19.09.90 Patentblatt 90/38**

(84) Benannte Vertragsstaaten: **BE DE ES FR GB IT NL**

(71) Anmelder: **BASF Aktiengesellschaft**
**Carl-Bosch-Strasse 38**
**D-6700 Ludwigshafen(DE)**

(72) Erfinder: **Muehlbach, Klaus, Dr.**
**Dr.-Heinrich-Winter-Strasse 19**
**D-6148 Heppenheim(DE)**
Erfinder: **McKee, Graham Edmund, Dr.**
**Kastanienweg 8**
**D-6940 Weinheim(DE)**
Erfinder: **Baugartner, Ehrenfried, Dr.**
**Goethestrasse 1**
**D-6701 Roedersheim-Gronau(DE)**

(54) **Thermoplastische Formmassen auf Basis von schlagzäh modifiziertem Polyamid und funktionalisiertem Polyphenylenäther.**

(57) Thermoplastische Formmassen, die frei von Cyanursäure oder Cyanursäurederivaten sind, enthaltend als wesentliche Komponenten

(A) 5 bis 95 Gew.% eines schlagzäh modifizierten Polyamids aus

a1) 70 bis 98 Gew.%, bezogen auf (A), eines Polyamids und

a2) 2 bis 30 Gew.%, bezogen auf (A), eines Emulsionspolymerisates, dessen Teilchen keine harte äußere Schale haben, und

(B) 5 bis 95 Gew.% eines funktionalisierten Polyphenylenethers, deren Herstellung und Verwendung.

EP 0 387 824 A2

# Thermoplastische Formmassen auf Basis von schlagzäh modifiziertem Polyamid und funktionalisiertem Polyphenylenether

Die Erfindung betrifft thermoplastische Formmassen, die frei von Cyanursäure oder Cyanursäurederivaten sind, enthaltend als wesentliche Komponenten

(A) 5 bis 95 Gew.% eines schlagzäh modifizierten Polyamids aus

a1) 70 bis 98 Gew.%, bezogen auf (A), eines Polyamids und

a2) 2 bis 30 Gew.%, bezogen auf (A), eines Emulsionspolymerisates, dessen Teilchen keine harte äußere Schale haben, und

(B) 5 bis 95 Gew.% eines funktionalisierten Polyphenylenethers.

Mischungen von Polyamiden mit Polyphenylenethern und schlagzäh modifizierenden Mitteln sind an sich bekannt, z.B. aus DE-A 3 443 154. Bei diesen Formmassen ist jedoch die Fließfähigkeit noch verbesserungsbedürftig. Weiterhin hat es sich gezeigt, daß die Schlagzähigkeit bei wiederholter Konfektionierung stark abfällt.

Weiterhin sind aus EP-A 236 593 und WO-A 87/00540 Formmassen aus gegebenenfalls funktionalisiertem Polyphenylenether, Polyamid und Schlagzähmodifiziermitteln bekannt. Die Schlagzähmodifiziermittel bestehen dabei aus Teilchen mit einem Kern-Schale-Aufbau mit kautschukartigem Kern und harter, nicht kautschukartiger Schale. Diese Formmassen haben jedoch den Nachteil, daß die Verarbeitbarkeit und die Schlagzähigkeit verbesserungsbedürftig sind.

In DE-A 3 732 907 werden Formmassen aus Polyamid, das Cyanursäure oder ein Cyanursäurederivat enthält, und modifiziertem Polyphenylenether beschrieben.

Aufgabe der vorliegenden Erfindung war es, thermoplastische Formmassen auf Basis von funktionalisiertem Polyphenylenether und schlagzäh modifiziertem Polyamid aufzufinden, die ein ausgewogenes Eigenschaftsbild von mechanischen und thermischen Eigenschaften unter Vermeidung der o.g. Nachteile aufweisen.

Demgemäß wurden die eingangs definierten Formmassen gefunden. Weiterhin wurden bevorzugte Ausführungsformen gemäß der Unteransprüche, ein Herstellverfahren und die Verwendung der Formmassen zur Herstellung von Formkörpern gefunden.

Die erfindungsgemäßen Formmassen enthalten als wesentliche Komponenten 5 bis 95, bevorzugt 40 bis 70 Gew.%, eines schlagzäh modifizierten Polyamids (A) und 5 bis 95, bevorzugt 30 bis 60 Gew.%, eines funktionalisierten Polyphenylenethers (B), wobei die Gewichtsprozente sich jeweils auf die Summe der Komponenten (A) und (B) beziehen.

(A) besteht aus 70 bis 98, bevorzugt 85 bis 97, insbesondere 85 bis 95 Gew.%, bezogen auf (A), eines Polyamids a1) und 2 bis 30, bevorzugt 3 bis 15, insbesondere 5 bis 15 Gew.%, bezogen auf (A), eines Emulsionspolymerisates a2).

Geeignet als a1) sind lineare Polyamide, die üblicherweise eine relative Viskosität von 2,2 bis 5,0, bevorzugt 2,5 bis 4, gemessen in 1 gew.%iger Lösung in 96 gew.%iger Schwefelsäure bei 23 °C, haben. Bevorzugt seien genannt Polyamide, die sich von Lactamen mit 7 bis 13 Ringgliedern ableiten, wie Polycaprolactam, Polycapryllactam oder Polylaurinlactam sowie Polyamide, die durch Umsetzen von Dicarbonsäuren mit Diaminen erhalten werden. Beispiele hierfür sind Polyamid-6,6, Polyamid-6,12 und das in der EP-A 39 524 beschriebene Polyamid-4,6. Auch solche Polyamide, die durch Umsetzen von Dicarbonsäuren mit Diisocyanaten erhalten werden, kommen in Frage.

Geeignete Dicarbonsäuren sind beispielsweise Alkandicarbonsäuren mit 5 bis 12, insbesondere 6 bis 10 Kohlenstoffatomen sowie Terephthalsäure und Isophthalsäure sowie beliebige Mischungen dieser Säuren.

Als Diamine seien beispielsweise Alkandiamine mit 4 bis 12, insbesondere 4 bis 8 Kohlenstoffatomen, ferner m-Xylylendiamin, p-Xylylendiamin, deren hydrierte Derivate, Bis(4-aminophenyl)methan, Bis(4-aminocyclohexyl)methan oder Bis(4-aminophenyl)propan-2,2 oder deren Mischungen genannt.

Besondere technische Bedeutung haben Polyamid-6 (Polycaprolactam), Polyamid-6,6 (Polyhexamethylenadipinamid) und deren Copolymere sowie Polyamide, die aus Hexamethylendiamin und Isophthalsäure sowie Terephthalsäure aufgebaut sind, erlangt.

Weiterhin seien genannt teilaromatische Copolyamide auf der Basis von Caprolactam, Adipinsäure, Hexamethylendiamin, Terephthalsäure und/oder Isophthalsäure. Von diesen seien Copolyamide mit wiederkehrenden Einheiten, die sich von Caprolactam und/oder Adipinsäure/Hexamethylendiamin einerseits sowie Terephthalsäure und Hexamethylendiamin andererseits ableiten, genannt. Ein besonders geeignetes Herstellungsverfahren für derartige Produkte ist z.B. in der EP-A 129 195 und der EP-A 129 196 beschrieben.

Es ist auch möglich und manchmal vorteilhaft, Mischungen der genannten Polyamide zu verwenden.

Die bekannten Emulsionspolymerisate a2) bestehen aus Teilchen, die in einer ein-, zwei- oder mehrstufigen Emulsionspolymerisation hergestellt werden, wie z.B. in Houben-Weyl, Methoden der organischen Chemie, Bd. 14 (1961) S. 133-406 und Bd. E20 (1987) S. 218 bis 313 und Encyclopedia of Polymer Science and Technology Bd. 5 (1966) S. 801 bis 859 dargestellt ist. Die verwendbaren Emulgatoren, Katalysatoren, ggf. Regler und Puffersysteme sind an sich bekannt. Der mittlere Durchmesser der Teilchen der Emulsionspolymerisate liegt üblicherweise zwischen 0,05 und 2 $\mu$m, insbesondere zwischen 0,08 und 0,7 $\mu$m. Die Teilchen der Emulsionspolymerisate können homogen aufgebaut sein oder bevorzugt einen Kern-Schale-Aufbau haben. Dieser Aufbau mit einem Kern und mindestens einer Schale wird üblicherweise bei der Emulsionspolymerisation durch die Zugabereihenfolge der einzelnen Monomeren oder Monomerengemische bestimmt. Auch die Morphologie der Teilchen wird durch die Zugabereihenfolge beeinflußt, Kern und Schale der Polymerisatteilchen bzw. die verschiedenen Schalen können miteinander durch Pfropfung chemisch verbunden sein oder durch Interpenetrating-Netzwerke miteinander gekoppelt sein. Emulsionspolymerisate mit Kern-Schale-Aufbau sind an sich bekannt, z.B. aus WO-A 87/00540, US-A 4 034 013 und EP-A 125 483. Bevorzugt werden ganz allgemein Emulsionspolymerisate mit Kern und einer Schale, es können aber unter bestimmten Umständen auch Emulsionspolymerisate, deren Teilchen 2 oder 3 Schalen enthalten, von Vorteil sein.

Kern und Schale bzw. Schalen des Emulsionspolymerisates können sich in verschiedenen Parametern unterscheiden, beispielsweise im Monomeren oder Monomerengemisch, in der Vernetzung oder im Molekulargewicht. Es hat sich als vorteilhaft herausgestellt, wenn mindestens eine Schale ein anderes Monomeres enthält als der Kern. Bevorzugt sind Emulsionspolymerisate a2) mit einem Dienkern und einer Schale auf Basis eines (Meth)acrylesters.

Die Emulsionspolymerisate a2) haben keine harte äußere Schale. Eine harte Schale im Sinne dieser Erfindung besitzt eine Glastemperatur von über +20 °C. Bevorzugte Emulsionspolymerisate a2) haben einen Kern und eine äußere Schale mit einer Glastemperatur von unter 0 °C, insbesondere unter -10 °C. Die Glastemperaturen lassen sich in einfacher Weise bestimmen, in dem das Monomere oder Monomerengemisch des Kerns oder wahlweise der Schale ohne die übrigen Polymerisationsstufen der Emulsionspolymerisation polymerisiert werden und an dem Reaktionsprodukt die Glastemperatur bestimmt wird, was beispielsweise nach K.H. Illers und H. Breuer, Kolloidzeitschrift 176 (1961), S. 110, geschehen kann.

Die zum Aufbau der elastomeren Teile des Emulsionspolymerisates a2) verwendbaren Monomeren sind an sich bekannt.

Nur stellvertretend seien hier als Monomere für die Herstellung des Elastomerenteils Acrylate wie z.B. n-Butylacrylat und 2-Ethylhexylacrylat, entsprechende Methacrylate, Butadien und Isopren sowie deren Mischungen genannt. Diese Monomeren können mit untergeordneten Mengen weiterer Monomerer wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Bei mehrschaligen Polymerisaten können auch Hartkomponenten, die üblicherweise eine Glasübergangstemperatur von über 20 °C aufweisen, als Kern oder als innere Schale am Aufbau beteiligt sein. Diese Hartkomponenten werden im allgemeinen durch Polymerisation von Styrol, Acrylnitril, Methacrylnitril, $\alpha$-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die reaktive Gruppen aufweisen, die bevorzugt in der äußeren Schale sind. Diese können die Haftung zwischen Emulsionspolymerisat und Polyamid fördern und werden üblicherweise durch Einpolymerisieren von funktionalisierenden Monomeren eingeführt. Derartige Gruppen sind z.B. Carbonsäureester-, -amid-, -imid-, -anhydridgruppen, Epoxid-, Carboxyl-, latente Carboxyl-, Urethan-, Harnstoff- oder Aminogruppen sowie funktionelle Gruppen, die durch Mitverwendung von Monomeren der allgemeinen Formel

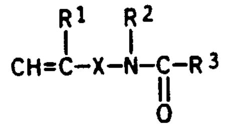

eingebaut werden, wobei die Substituenten folgende Bedeutung haben können:

$R^1$ Wasserstoff oder eine $C_1$-$C_4$-Alkylgruppe,

$R^2$ Wasserstoff, eine $C_1$-$C_8$-Alkylgruppe oder eine Arylgruppe, insbesondere Phenyl,

$R^3$ Wasserstoff, eine $C_1$-$C_{10}$-Alkyl-, eine $C_6$-$C_{12}$-Alkylgruppe oder -$OR^4$,

$R^4$ eine $C_1$-$C_8$-Alkyl- oder $C_6$-$C_{12}$-Arylgruppe, die gegebenenfalls mit O- oder N-haltigen Gruppen substituiert sein können,
X eine chemische Bindung, eine $C_1$-$C_{10}$-Alkylen- oder $C_6$-$C_{12}$-Arylengruppe oder

$$-\overset{O}{\overset{\|}{C}}-Y$$

Y O-Z- oder NH-Z- und
Z eine $C_1$-$C_{10}$-Alkylen- oder $C_6$-$C_{12}$-Arylengruppe.

Auch die in der EP-A 208 187 beschriebenen Pfropfmonomeren sind zur Einführung reaktiver Gruppen geeignet.

Beispiele für Monomere, mit denen die erwähnten reaktiven Gruppen eingeführt werden können sind Methacrylsäureglycidylester, Acrylsäureglycidylester, Allylglycidylether, Vinylglycidylether, Itaconsäureglycidylester, Acrylsäure, Methacrylsäure und ihre Metall-, insbesondere Alkalimetall- und Ammoniumsalze, Maleinsäure, Fumarsäure, Itaconsäure, Vinylbenzoesäure, Vinylphthalsäure und Monoester dieser Säuren mit Alkoholen ROH, wobei R bis zu 29 Kohlenstoffatome aufweist und z.B. eine Methyl-, Ethyl-, Propyl-, Isopropyl-, n-Butyl-, i-Butyl-, Hexyl-, Cyclohexyl-, Octyl-, 2-Ethylhexyl-, Decyl-, Stearyl-, Methoxyethyl-, Ethoxyethyl- oder Hydroxyethylgruppe darstellt. Maleinsäureanhydrid und Metallsalze (insbesondere Alkalimetall- und Erdalkalimetallsalze) von polymerisierbaren Carbonsäuren sowie Ester von Acrylsäure oder Methacrylsäure mit tertiären Alkoholen, z.B. tert.-Butylacrylat weisen zwar keine freien Carboxylgruppen auf, kommen in ihrem Verhalten aber den freien Säuren nahe und werden deshalb als Monomere mit latenten Carboxylgruppen bezeichnet.

Als weitere Beispiele seien noch Acrylamid, Methacrylamid und substituierte Ester der Acrylsäure oder Methacrylsäure wie (N-t-Butylamino)ethylmethacrylat, (N,N-Dimethylamino)ethylacrylat, (N,N-Dimethylamino)methylacrylat, (N,N-Diethylamino)ethylacrylat und N-Methylvinylurethan genannt.

Manchmal ist es vorteilhaft, die Emulsionspolymerisate bzw. die äußere Schale inhomogen aufzubauen, indem man beispielsweise die reaktive Gruppen liefernden Monomeren erst gegen Ende der Polymerisation bzw. Polymerisationsstufe zusetzt. Dadurch wird bewirkt, daß zumindest die Oberfläche der Polymerisatteilchen reaktive Gruppen aufweist. Ein Anteil von 0,1 bis 20, bevorzugt 0,2 bis 10, insbesondere 0,3 bis 8 Gew.%, dieser Monomeren in der äußeren Schale der Polymerisatteilchen hat sich bewährt.

Die Teilchen des Emulsionspolymerisates a2) können zumindest teilweise vernetzt sein. So kann z.B. der Kern des Polymerisatteilchens vernetzt sein, während die äußere Schale, die vorzugsweise die funktionalisierenden haftungsfördernden Comonomeren einpolymerisiert enthält, auch unvernetzt sein oder umgekehrt. Es können auch Kern und Schale vernetzt sein. Bei mehrschaligem Aufbau kann die Vernetzung der einzelnen Schalen durch entsprechende Steuerung der Polymerisationsstufen den Erfordernissen angepaßt werden. Als vernetzende Monomere gelten solche, die mindestens zwei copolymerisierbare Mehrfachbindungen enthalten. Beispielsweise sind Butadien, Penta-1,3-dien, Divinylbenzol, Diallylphthalat und Dihydrodicyclopentadienylacrylat sowie Allylacrylat, Allylmethacrylat, Diallylmaleat, Diallylfumerat, Diallylitaconat oder die entsprechenden Monoverbindungen der Dicarbonsäuren genannt. Im allgemeinen beträgt der Anteil dieser Vernetzer bis zu 5, vorzugsweise 0,1 bis 3 Gew.%, bezogen auf das Monomerengemisch der zu vernetzenden Polymerisationsstufe.

Funktionalisierte Polyphenylenether B sind an sich bekannt, z.B. aus WO-A 86/02086, WO-A 87/00540, EP-A 222 246, EP-A 223 116 und EP-A 254 048. Sie sind vorzugsweise erhältlich durch Funktionalisieren von Polyphenylenether b1 oder einem Gemisch aus b1 mit 0 bis 20, bevorzugt 5 bis 20 Gew.%, bezogen auf das Gemisch, eines vinylaromatischen Polymeren b2. Unter Funktionalisieren wird dabei eine Umsetzung des Polyphenylenethers b1, ggf. gemischt mit b2, mit den ungesättigten Monomeren b3 verstanden.

Die Polyphenylenether b1 sind an sich bekannt. Sie werden nach üblichen Verfahren aus in ortho-Position durch Alkylgruppen disubstituierten Phenolen durch oxidative Kupplung hergestellt (vgl. US-Patente 3 661 848, 3 219 625, 3 378 505, 3 306 874, 3 306 875 und 3 639 656). Geeignete Polyphenylenether sind beispielsweise Poly(2,6-diethyl-1,4-phenylen)ether, Poly(2-methyl-6-ethyl-1,4-phenylen)ether, Poly(2-methyl-6-propyl-1,4-phenylen)ether, Poly(2,6-dipropyl-1,4-phenylen)ether, Poly(2-ethyl-6-propyl-1,4-phenylen)ether oder Copolymere, wie solche, die 2,3,6-Trimethylphenol enthalten, außerdem Polymermischungen. Bevorzugt ist Poly(2,6-dimethyl-1,4-phenylen)ether. Die in einem solchen Verfahren hergestellten Polyphenylenether weisen im allgemeinen eine relative Viskosität von 0,3 bis 0,8 dl/g, gemessen in 1 gew.%iger Lösung in $CHCl_3$ bei 25 °C auf.

Das ggf. dem Polyphenylenether b1 beigemischte vinylaromatische Polymere b2 ist im allgemeinen mit b1 verträglich.

Beispiele für solche mit Polyphenylenether verträglichen vinylaromatischen Polymere sind der Monographie von O. Olabisi, Polymer-Polymer Miscibility (1979) S. 224 bis 230 und 245 zu entnehmen. Nur stellvertretend seien hier vinylaromatische Polymere aus Styrol, Chlorstyrol, $\alpha$-Methylstyrol und para-

Methylstyrol genannt; in untergeordneten Anteilen (vorzugsweise nicht mehr als 8 Gew.%), können auch Comonomere wie (Meth)acrylnitril oder (Meth)acrylsäureester am Aufbau beteiligt sein. Ein besonders bevorzugtes vinylaromatisches Polymer ist Polystyrol. Es versteht sich, daß auch Mischungen dieser Polymeren eingesetzt werden können.

Das Molekulargewicht dieser an sich bekannten Polymeren liegt im allgemeinen im Bereich von 1500 bis 1 000 000, vorzugsweise im Bereich von 70 000 bis 500 000.

Das ethylenisch ungesättigte Monomere b3 enthält mindestens eine Epoxidgruppe, Aminogruppe, Carbonsäure-, Carbonsäureanhydrid-, -ester-, -amid- oder -imidgruppe. Bevorzugt sind Monomere b3, die zwei C=O-Gruppen enthalten. Beispielhaft genannt seien Methylmaleinsäure, Methylmaleinsäureanhydrid, Itakonsäure, Itakonsäureanhydrid, Maleinsäure, Maleinsäureanhydrid, Butenylbernsteinsäure, Butenylbernsteinsäureanhydrid, Tetrahydrophthalsäure, Tetrahydrophthalsäureanhydrid, Fumarsäure, N-Phenylmaleinimid, Mono- oder Diester der genannten Säuren mit $C_1$- bis $C_{12}$-Alkoholen wie Methanol oder Ethanol, die Mono- oder Diamide der genannten Säuren, die am N ggf. mit Alkyl- oder Arylresten mit bis zu 12 C-Atomen substituiert sein können. Besondere Vorteile bieten Maleinsäure, Fumarsäure und Maleinsäureanhydrid.

Üblicherweise werden bei der Funktionalisierung 70 bis 99,9, bevorzugt 80 bis 97 Gew.%, b1, 0 bis 20, bevorzugt 2 bis 15 Gew.% b2 und 0,1 bis 30, bevorzugt 0,98 bis 10 Gew.% b3 eingesetzt. Es kann von Vorteil sein, die Funktionalisierung in Gegenwart von bis zu 5, bevorzugt 0,02 bis 0,09 Gew.% Radikalstarter b4 durchzuführen. Die angegebenen Gewichtsprozente beziehen sich jeweils auf die Summe der eingesetzten Stoffe b1 bis b4.

Die Wahl des Radikalstarters richtet sich in üblicher Weise nach der Reaktionstemperatur. Bekannte Radikalstarter sind beispielsweise Di-(2,4-dichlorbenzoyl)peroxid, tert.-Butylperoxid, Di-(3,5,5-trimethylhexanol)peroxid, Dilauroylperoxid, Didecanoylperoxid, Dipropionylperoxid, Dibenzoylperoxid, tert.-Butylperoxy-2-ethylhexoat, tert.-Butylperoxydiethylacetat, tert.-Butylperoxyisobutyrat, 1,1-Di-tert.-butylperoxy-3,3,5-trimethylcyclohexan, tert.-Butylperoxyisopropylcarbonat, tert.-Butylperoxy-3,3,5-trimethylhexoat, tert.-Butylperacetat, tert.-Butylperbenzoat, 4,4-Di-tert.-butylperoxyvaleriansäure-butylester, 2,2-Ditert.-butylperoxybutan, Dicumylperoxid, tert.-Butylcumylperoxid, 1,3-Di-(tert.-butylperoxyisopropyl)benzol und Di-tert.-butylperoxid. Genannt seien ebenfalls organische Hydroperoxide wie Di-isopropyl-benzolmonohydroperoxid, Cumolhydroperoxid, tert.-Butylhydroperoxid, p-Menthylhydroperoxid und Pinanhydroperoxid sowie 2,3-Dimethyl-2,3-diphenylbutan, 3,4-Dimethyl-3,4-diphenylhexan und 2,2,3,3-Tetraphenylbutan.

Die Funktionalisierung kann in bekannter Weise bei Temperaturen zwischen 240 und 360 °C, bevorzugt von 250 bis 330 °C im Verlaufe von 0,2 bis 15, bevorzugt 1 bis 10 Minuten in geeigneten Misch- und Knetaggregaten wie Zweischneckenextrudern erfolgen.

Zusätzlich zu diesen wesentlichen Komponenten können die erfindungsgemäßen Formmassen bis zu 100, bevorzugt 5 bis 30 Gew.-Teile , bezogen auf 100 Gew.-Teile der Summe der Komponenten (A) und (B), eines nichtfunktionalisierten Polyphenylenethers (C) enthalten. Dieser ist bereits unter Komponenten b1) beschrieben, so daß sich weitere Erläuterungen erübrigen.

Weiterhin können die erfindungsgemäßen Formmassen als Komponenten (D) bis zu 50, bevorzugt 5 bis 20 Gew.-Teile, bezogen auf 100 Gew.-Teile der Summe der Komponenten (A) und (B), eines vinylaromatischen Polymerisates enthalten. Bevorzugt werden schlagzäh modifizierte Polymere oder Blockcopolymere.

Geeignete Polymerisate sind alle bekannten aus vinylaromatischen Monomeren aufgebauten Homo- und Copolymerisate. Bevorzugte Polymerisate leiten sich von Styrol sowie kern- oder seitenkettenalkylsubstituierten Styrolen ab. Bevorzugte Monomere, von denen sich die Polymeren ableiten, sind Styrol, p-Methylstyrol und α-Methylstyrol, insbesondere Styrol. Als Comonomere werden ggf. bis zu 10 Gew.%, bezogen auf das vinylaromatische Monomere, polare Verbindungen wie Acrylnitril, (Meth)acrylsäure, Meth(acrylsäure)ester von Alkoholen mit 1 bis 8 Kohlenstoffatomen und/oder Maleinsäure verwendet.

Es können auch unpolare Comonomere wie Butadien, Isopren oder Pentadien mitverwendet werden, die zusammen mit den oben genannten vinylaromatischen Monomeren statistisch oder blockartig aufgebaute Copolymere ergeben.

Genannt seien Styrol-Butadien-Blockcopolymere einschließlich AB-, ABA- und ABAB-Blockcopolymere, die auch verschmierte Übergänge haben können, Sternblockcopolymere und ähnliche, analoge Isoprenblockcopolymerisate und (teil)hydrierte Blockcopolymerisate. A steht dabei für Styrol und B für Butadien oder Isopren. Solche Blockcopolymeren sind beispielsweise bekannt aus DE-A 2 255 930 und DE-A 2 434 848.

Beispiele für geeignete Styrolpolymerisate sind Polystyrol, Poly-p-methylstyrol, Poly-α-methylstyrol, Styrol/α-methylstyrol-Copolymerisate, Styrol/Acrylnitril-Copolymerisate, Copolymerisate aus Styrol/Methylacrylat, Styrol/Butylacrylat, Styrol/Methylmethacrylat, Styrol/Butadien, Styrol/Maleinsäureanhydrid, Styrol/Acrylnitril/Butadien, Copolymerisate von Ethylvinylbenzol und Divinylbenzol sowie Acrylharzmodifizierte Styrol/Butadien-Polymerisate. Geeignet sind auch Gemische von Homopolystyrol und den vorgenannten Copolymerisaten.

Geeignete vinylaromatische Polymerisate sind auch mit kautschuk-elastischen Polymerisaten schlagzäh modifizierte Styrolpolymerisate. In der Regel enthalten solche schlagzähe Styrolpolymerisate 2 bis 20 Gew.% eines kautschukelastischen Polymerisats. Bevorzugte kautschuk-elastische Polymerisate haben eine Glastemperatur (Tg) von ≦ 0 °C, insbesondere ≦ -20 °C. Beispielhaft seien thermoplastische Kautschuke, wie Polybutadien-, Polybuten-, Polyisopren-, Acrylnitrilbutadien-, Ethylenpropylen-, Polyester- oder Ethylenkautschuke und elastomere Copolymere aus Ethylen und Ester der (Meth)acrylsäure, z.B. Ethylenbutylacrylatcopolymere erwähnt. Weiterhin seien genannt Ionomere, Polyoctenylene und die oben erwähnten Styrol-Butadien- oder Styrol-Isopren-Blockcopolymeren.

Die erfinderischen Formmassen können weiterhin bekannte Zusatzstoffe und Verarbeitungshilfsmittel enthalten. Es kann sich dabei und Verstärkungs- und Füllstoffe handeln, die in Mengen bis 80, bevorzugt 20 bis 60 Gew.-Teilen, bezogen auf 100 Gew.-Teile der Summe der Komponenten (A) und (B) eingesetzt werden.

Genannt seien Verstärkungsstoffe wie Glasfasern, Asbestfasern, Kohlenstoffasern oder aromatische Polyamidfasern und Füllstoffe wie Gipsfasern, synthetische Calciumsilikate, Kaolin, calciniertes Kaolin, Wollastonit, Talkum und Kreide. Es können auch Kombinationen dieser Stoffe eingesetzt werden.

Weiterhin seien genannt Materialien zu Erhöhung der Abschirmung von elektromagnetischen Wellen (z.B. Metallflocken, -pulver, -fasern, metallbeschichtete Füllstoffe), Farbstoffe, Pigmente, Antistatika, Antioxidantien, Oxidationsverzögerer, Flammschutzmittel, Wärme- und UV-Stabilisatoren sowie Gleit- und Entformungsmittel, die für die Weiterverarbeitung der Formmassen, z.B. bei der Herstellung von Formteilen erforderlich sind.

Oxidationsverzögerer und Wärmestabilisatoren, die den thermoplastischen Massen gemäß der Erfindung zugesetzt werden können, sind z.B. Halogenide von Metallen der Gruppe I des periodischen Systems, z.B. Natrium-, Kalium-, Lithiumhalogenide, ggf. in Verbindung mit Kupfer-(I)-halogeniden, z.B. Chloriden, Bromiden oder Jodiden. Ferner sind sterisch gehinderte Amine oder Phenole, Hydrochinone, substituierte Vertreter dieser Gruppe und Mischungen derselben, einsetzbar.

Beispiele für UV-Stabilisatoren sind verschiedene substituierte Resorcine, Salicylate, Benzotriazole und Benzophenone.

Gleit- und Entformungsmittel sind Stearinsäuren, Stearylalkohol, Stearinsäurealkylester und -amide sowie Ester des Pentaerythrits mit langkettigen Fettsäuren.

Als Flammschutzmittel seien genannt halogenhaltige Stoffe wie 2,6,2′,6′-Tetrabrombisphenol, Tetrabromphthalsäure und deren Derivate, Poly-2,6-dibromphenol, Tribromphenol und deren Derivate, chlorierte Kohlenwasserstoffe, die ggf. in Kombination mit Synergisten wie Antimon-, Bor- oder Zinkverbindungen eingesetzt werden. Weiterhin seien phosphorhaltige Flammschutzmittel genannt, wie sie aus den deutschen Anmeldungen P 37 32 907.3 und P 38 31 992.6 bekannt sind, wie z.B. roter Phosphor, Triphenylphosphat, Triphenylphosphit und Triphenylphosphinoxid.

Übliche Zusatzstoffe für Formmassen aus Polyphenylenether und Polyamid sind darüber hinaus Phasenvermittler. Solche Stoffe sind beispielsweise bekannt aus EP-A 24 120, EP-A 46 040, EP-A 164 767 und EP-A 182 163. Es kann sich um flüssige Dienpolymere, die ggf. mit Maleinsäureanhydrid umgesetzt sind, olefinisch ungesättigte Carbonsäuren und deren Derivate wie Maleinsäureanhydrid, Maleinsäure, Fumarsäure, die ggf. mit Styrol copolymerisiert sein können, um oxidierte Polyolefine oder um Siliciumverbindungen handeln.

Die erfindungsgemäßen thermoplastischen Formmassen erhält man zweckmäßig durch Mischen der Einzelkomponenten bei Temperaturen von 250 bis 380 °C in üblichen Mischvorrichtungen, wie Knetern, Banburymischern und Einschneckenextrudern, vorzugsweise jedoch in einem Zweischneckenextruder. Um eine möglichst homogene Formmasse zu erhalten, ist eine intensive Durchmischung notwendig. Dazu sind im allgemeinen mittlere Mischzeiten von 0,2 bis 30 Minuten erforderlich. Die Abmischreihenfolge der Komponenten kann variiert werden, so können 2 oder gegebenenfalls 3 Komponenten vorgemischt werden, es können aber auch alle Komponenten gemeinsam gemischt werden. Bevorzugt werden a1) und a2) vorgemischt bei Temperaturen von 250 bis 300 °C in Verlaufe von 0,3 bis 5 Minuten, wobei a2) vorteilhafterweise als wäßrige Dispersion eingesetzt wird. Das Wasser wird durch geeignete Maßnahmen wie Anlegen von Vakuum entfernt. Es kann von Vorteil sein, den funktionalisierten Polyphenylenether (B) in einer ersten Zone eines Extruders herzustellen und in einer oder mehreren nachfolgenden Zonen dieses Extruders mit den übrigen Komponenten der erfindungsgemäßen Formmasse zu vermischen. Ein solches Verfahren ist in der DE-A 37 02 582 beschrieben.

Aus den erfindungsgemäßen thermoplastischen Formmassen lassen sich durch Spritzgießen oder Extrusion Formkörper mit vorteilhaften Eigenschaften herstellen. Die erfindungsgemäßen Formmassen

zeichnen sich durch ein ausgewogenes Eigenschaftsbild aus. Sie haben eine gute Verarbeitbarkeit, weisen eine hohe Durchstoßarbeit verbunden mit duktilem Bruch auf und besitzen eine hohe Schlagzähigkeit, die bei wiederholtem Konfektionieren nur geringfügig abfällt.

Beispiele und Vergleichsversuche

Folgende Komponenten wurden eingesetzt:

Komponenten A:

a1 (1): Polyamid 6, Zahlenmittel des Molekulargewichts $\overline{M}_n$ = 18 000

a1 (2): Polyamid 6,6, $\overline{M}_n$ = 22 000

a2: Ein Emulsionspolymerisat wurde hergestellt, indem in wäßriger Dispersion 67,2 Teile einer Mischung aus 99 Teilen Butadien und 1 Teil t-Dodecylmerkaptan polymerisiert wurden. Danach erfolgte eine gezielte Agglomeration der Polybutadienteilchen durch Zugabe einer Polymerdispersion aus einem Copolymeren aus Ethylacrylat und Methacrylamid (96:4) in Wasser. Das Verhältnis Ethylacrylatcopolymer zu Polybutadien-t-Dodecylmerkaptanpolymer betrug 4:96. Auf die agglomerierte Polybutadiendispersion wurde als äußere Schale eine Monomermischung aus n-Butylacrylat, t-Butylacrylat und Methacrylsäure (93,4:6:0,6) polymerisiert. Das Verhältnis Kern (Polybutadien- t-Dodecylmerkaptan) zu äußerer Schale betrug 7:3. Der mittlere Teilchendurchmesser ($d_{50}$-Wert) bestimmt durch Ultrazentrifuge betrug 0,5 µm. Teile + Verhältnisse beziehen sich auf das Gewicht.

A′: Eine Vormischung aus a1 (2) und a2 wurde in einem Extruder ZSK 53 der Fa. Werner und Pfleiderer hergestellt. Die Komponente a1 (2) wurde am Einzug der Schneckenmaschine zugeführt und in einer ersten Schneckenzone plastifiziert und über eine Knetzone in eine zweite Schneckenzone gefördert, in die die wäßrige Suspension des kautschukelastischen Polymerisats dosiert wurde (50 Gew.-Teile Polymerisat + 50 Gew.-Teile Wasser).

Thermoplast und Kautschuk wurden in den nachfolgenden Extruderabschnitten miteinander innig vermischt, wobei im Anschluß an die Knetzone das spontan verdampfte Wasser als Dampf durch Entgasungsstutzen entfernt und anschließend die Masse als Strang ausgepreßt, abgekühlt und zerkleinert wurde. Es wurde bei 280° C gearbeitet. Die mittlere Verweilzeit des Polyamids im Extruder betrug 2 Minuten.

Die Massenströme von a1 (2) und a2 wurden so eingestellt, daß die Komponenten A′ 75 Gew.% a1 (2) und 25 Gew.% a2 enthält.

A′ (V): Zu Vergleichszwecken wurde ein Emulsionspolymerisat mit harter äußerer Schale eingesetzt.

a2 (V): 16 Gew.-Teile Butylacrylat und 0,4 Gew.-Teile Tricyclodecenylacrylat werden in 150 Gew.-Teilen Wasser unter Zusatz von einem Gew.-Teil des Natriumsalzes einer $C_{12}$-$C_{18}$-Paraffinsulfonsäure, 0,3 Gew.-Teilen Kaliumpersulfat, 0,3 Gew.-Teilen Natriumhydrogencarbonat und 0,15 Gew.-Teilen Natriumpyrophosphat unter Rühren auf 60° C erwärmt. 10 Minuten nach dem Anspringen der Polymerisationsreaktion wurden innerhalb von 3 Stunden eine Mischung aus 82 Gew.-Teilen Butylacrylat und 1,6 Gew.-Teilen Tricyclodecenylacrylat zugegeben. Nach Beendigung der Monomerzugabe wurde noch eine Stunde nachreagieren gelassen. Der erhaltene Latex des vernetzten Butylacrylat-Polymerisats hatte einen Feststoffgehalt von 40 Gew.%. Die mittlere Teilchengröße (Gewichtsmittel) wurde zu 96 nm ermittelt.

150 Gew.-Teile des so erhaltenen Polybutylacrylat-Latex wurden mit 20 Gew.-Teilen einer Mischung aus Styrol, Methylmethacrylat und Maleinsäureanhydrid (Gewichtsverhältnis 75/23/2) und 40 Gew.-Teilen Wasser gemischt und unter Rühren nach Zusatz von weiteren 0,03 Gew.-Teilen Kaliumpersulfat und 0,05 Gew.-Teilen Lauroylperoxid 4 Stunden auf 65° C erhitzt. Nach Beendigung der Polymerisation wurde das Polymerisat wie bei A′ beschrieben mit a1 (2) zu der Mischung A′ (V) aus 75 Gew.% a1 (2) und 25 Gew.% des Polymerisates a2 (V) verarbeitet.

Komponente B

B: 89 Gew.% Poly-(2,6-dimethyl-1,4-phenylen)ether mit einer relativen Viskosität von 0,55 dl/g (1 gew.%ig in $CHCl_3$ bei 25° C) und 8,5 Gew.% Polystyrol (PS 144 C der BASF AG, Schmelzflußindex MFI bei 200° C/5 kg Belastung = 24 g/10 min) 2,45 Gew.% Fumarsäure und 0,05 Gew.% 3,4-Dimethyl-3,4-diphenylhexan wurden in einem Zweischneckenextruder (ZSK 53; Werner & Pfleiderer) dosiert, in einem ersten Teil unter Verwendung von Knetelementen bei 255° C aufgeschmolzen, in einem zweiten Teil unter

Kneten und Verwendung von Knetelementen bei 265 °C umgesetzt und anschließend in einer Entgasungszone bei 255 °C durch Anlegen von Vakuum entgast. Die mittlere Verweilzeit im Extruder betrug 2,5 min.

Komponente C

C: Poly-(2,6-dimethyl-1,4-phenylen)ether mit einer relativen Viskosität von 0,55 dl/g (1 gew.%ig in $CHCl_3$ bei 25 °C).

Komponente D

D (1): Styrol-Butadien-Styrol-Dreiblockcopolymer mit einem Styrolgehalt von 30 Gew.% (Cariflex® TR 1102 der Fa. Shell);

D (2): Zweiblockcopolymeres aus Styrol und hydriertem Polybutadienblock (35 Gew.% Styrolgehalt) : $M_w$ = 95 000

Zur Herstellung von Formteilen wurden die Komponenten gemäß Tabelle 1 auf einem Zweischneckenextruder mit einem Schneckendurchmesser von 40 mm bei einer Zylindertemperatur von 280 °C gemischt. Der Schmelzstrang wurde durch ein Wasserbad geführt und granuliert. Das getrocknete Granulat wurde bei 280 °C zu Normkleinstäben gespritzt.

Tabelle 1

| Einsatzstoffe zur Herstellung der Formmassen | | | | | | | |
|---|---|---|---|---|---|---|---|
| Bsp. | Vergleichsversuche | Komponenten, Mengenangaben in Gew.-Teilen | | | | | |
| | | A | | B | C | D | |
| | | Art | Menge | Menge | Menge | Art | Menge |
| 1 | | A′ | 24 | 37 | | D (2) | 14 )* |
| | | a1 (2) | 20 | | | | |
| 2 | | A′ | 26 | 33 | 5 | D (1) | 10 |
| | | a1 (1) | 26 | | | | |
| | 2* | A′ (V) | 26 | 33 | 5 | D (1) | 10 |
| | | a1 (1) | 26 | | | | |
| 3 | | A′ | 18 | 44 | | D (1) | 12 |
| | | a1 (2) | 26 | | | | |
| | 3* | A′ | 18 | | 44 | D (1) | 12 |
| | | a1 (2) | 26 | | | | |

*) In Beispiel 1 wurden den Komponenten A, B und D (2) 5 Gew.-Teile Polystyrol 144 (der BASF AG) zugemischt.

Aus den Angaben der Tabelle 1 errechnen sich die in Tabelle 2 angegebenen Mengen der Komponenten, die in den Formmassen der Beispiele 1 bis 3 vorliegen. Der Vergleichsversuch 2* unterscheidet sich von Beispiel 2 lediglich dadurch, daß statt des Emulsionspolymerisates a2 das Emulsionspolymerisat a2 (V) mit harter äußerer Schale verwendet wurde. In Vergleichsversuch 3* wurde gegenüber Bespiel 3 kein funktionalisierter Polyphenylenether B eingesetzt, sondern stattdessen nicht funktionalisierter Polyphenylenether C.

Tabelle 2: Zusammensetzung der Formmassen der Beispiele 1 bis 3

| Bsp. | Komponente A Bestandteile Art | Komponente A Bestandteile Menge [%, bezogen auf A] | Komponente A Menge [%, bezogen auf A + B] | Komponente B Menge [%, bezogen auf A + B] | Komponente C Menge Gew.-Tl )** | Komponente D Art | Komponente D Menge Gew.-Tl )** |
|---|---|---|---|---|---|---|---|
| 1 | a1 (2) | 86,4 | 54,3 | 45,7 | | D (2) | 17,3 )* |
| | a2 | 13,6 | | | | | |
| 2 | a1 (1) | 50,0 | 61,2 | 38,8 | 5,9 | D (1) | 11,8 |
| | a1 (2) | 37,5 | | | | | |
| | a2 | 12,5 | | | | | |
| 3 | a1 (2) | 89,8 | 50,0 | 50,0 | | D (1) | 13,6 |
| | a2 | 10,2 | | | | | |

)* Die Formmasse von Beispiel 1 enthält zusätzlich 6,2 Gew.-Teile Polystyrol 144 (der BASF AG)

)** Jeweils bezogen auf 100 Gew.-Teile der Summe der Komponenten A und B

Es wurde die Kerbschlagzähigkeit nach DIN 53435, die Durchstoßbarkeit nach DIN 53435 und der Schmelzindex nach DIN 53735 bei 280 °C/10 kg bestimmt.

An den gebrochenen Probekörpern wurde visuell bestimmt, ob ein duktiler Bruch vorliegt.

Der Abfall der Lochkerbschlagzähigkeit wurde nach der Gleichung

$$\Delta\ a_{KL} = \frac{a_{KL}\ (1) - a_{KL}\ (2)}{a_{KL}\ (1)} \cdot 100\ [\%]$$

berechnet. $a_{KL}$ (1) ist die an bei 280 °C gespritzten Normkleinstäben (1) nach DIN 53753 gemessene Lochkerbschlagzähigkeit. $a_{KL}$ (2) ist die gleiche Meßgröße, bestimmt an Normkleinstäben (2), die durch Spritzen von gemahlenen Normkleinstäben (1) hergestellt wurden. Die Meßergebnisse sind in Tabelle 3 zusammengestellt.

Tabelle 3

| Eigenschaften der Formmassen | | | | | | |
|---|---|---|---|---|---|---|
| Bsp. | Vergleichsversuch | Kerbschlagzähigkeit $a_K$ [kJ/m²] | Durchstoßarbeit $W_{Ges}$ [Nm] | Schmelzindex MFI [g/10 min] | duktiler Bruch | Abfall der Schlagzähigkeit nach nochmaliger Konfektionierung $\Delta$ $a_{KL}$ [%] |
| 1 | | 43 | 60 | 60 | ja | |
| 2 | | 53 | 60 | 68 | ja | |
| | 2* | 39 | 5 | 53 | nein | |
| 3 | | | | 74 | | 63 |
| | 3* | | | 45 | | 92 |

**Ansprüche**

1. Thermoplastische Formmassen, die frei von Cyanursäure oder Cyanursäurederivaten sind, enthaltend als wesentliche Komponenten

(A) 5 bis 95 Gew.% eines schlagzäh modifizierten Polyamids aus

a1) 70 bis 98 Gew.%, bezogen auf (A), eines Polyamids und

a2) 2 bis 30 Gew.%, bezogen auf (A), eines Emulsionspolymerisates, dessen Teilchen keine harte äußere Schale haben, und

(B) 5 bis 95 Gew.% eines funktionalisierten Polyphenylenethers.

2. Formmassen nach Anspruch 1, in denen a2) ein Emulsionspolymerisat ist, dessen Teilchen aus einem Kern und mindestens einer Schale bestehen, wobei weder der Kern noch die äußere Schale eine Glastemperatur von über 0 °C aufweisen.

3. Formmassen nach mindestens einem der Ansprüche 1 oder 2, in denen das Emulsionspolymerisat a2) in der äußeren Schale mindestens eine reaktive Gruppe aufweist.

4. Formmassen nach Anspruch 3, in denen die reaktive Gruppe im Emulsionspolymerisat durch Einpolymerisieren eines funktionalisierenden Monomeren eingeführt ist, das eine Carbonsäure-, Carbonsäureester-, Carbonsäureamid-, Carbonsäureimid- oder Carbonsäureanhydridgruppe, eine latente Carboxylgruppe oder eine Epoxid-, Harnstoff-, Amino- oder Urethangruppe enthält.

5. Formmassen nach mindestens einem der Ansprüche 1 bis 4, in denen der funktionalisierte Polyphenylenether (B) durch Umsetzen von

b1) 70 bis 99,9 Gew.% Polyphenylenether,

b2) 0 bis 20 Gew.% eines vinylaromatischen Polymeren,

b3) 0,1 bis 30 Gew.% einer ethylenisch ungesättigten Verbindung mit mindestens einer Epoxidgruppe, Aminogruppe, Carbonsäure-, Carbonsäureanhydrid-, -ester-, -amid- oder -imidgruppe und

b4) 0 bis 5 Gew.% Radikalstarter,

wobei sich die Gewichtsprozente auf die Summe von b1) bis b4) beziehen, im Verlaufe von 0,2 bis 15 Minuten bei 240 bis 360 °C hergestellt wurde.

6. Formmassen nach Anspruch 1, die zusätzlich als Komponente (C) nicht funktionalisierten Polyphenylenether enthalten.

7. Formmassen nach Anspruch 1, die zusätzlich ein vinylaromatisches Polymerisat (D) enthalten.

8. Formmassen nach Anspruch 7, in denen das vinylaromatische Polymerisat (D) schlagzäh modifiziert ist.

9. Verfahren zur Herstellung von thermoplastischen Formmassen gemäß mindestens einem der Ansprüche 1 bis 8, dadurch gekennzeichnet, daß man a1) und a2) bei Temperaturen von 250 bis 300 °C im Verlaufe von 0,3 bis 5 Minuten vormischt zur Komponente (A), die anschließend bei 250 bis 380 °C im Verlaufe von 0,2 bis 30 Minuten mit der Komponente (B) vermischt werden.